# EUROPEAN PATENT SPECIFICATION

(11) **EP 3 812 185 B1**
(45) Date of publication and mention of the grant of the patent: **15.06.2022**
(21) Application number: 20200234.1
(22) Date of filing: 06.10.2020
(51) Int. Cl.: B60H 1/34, B60Q 3/20, B60Q 3/64, B60Q 3/78

(54) **AIR DIFFUSER FOR MOTOR VEHICLES**
LUFTVERTEILER FÜR KRAFTFAHRZEUGE
DIFFUSEUR D'AIR POUR VÉHICULES AUTOMOBILES

(30) Priority: 24.10.2019 ES 201930942
(43) Date of publication of application: 28.04.2021
(73) Proprietor: Seat, S.A., 08760 Martorell (ES)
(72) Inventor: DE MENDONÇA MAIA, André, 08760 MARTORELL (ES); GURMENDI CULLA, Mikel, 08760 MARTORELL (ES)
(74) Representative: Ponti & Partners, S.L.P

(56) References cited:
- DE-A1-102015 115 365
- DE-U1-212017 000 267
- FR-A1- 2 942 326
- US-A1- 2009 298 406

## Description

### Technical field

The present invention concerns an air diffuser for motor vehicles, comprising lighting means which provide a homogeneous and indirect lighting of the air diffuser, which is perceptible by the user of the vehicle even without direct visual contact with the air diffuser.

### Prior state of the art

Air diffusers for motor vehicles comprising the features included in the preamble of claim 1 are known.

This is the case, for example, of the one described in patent document US20160185286A1, which comprises:
- a casing, in particular a duct, which defines a passageway for the circulation of an air flow towards an outlet opening thereof, wherein the casing comprises a perimeter frame which delimits the outlet opening and which comprises a perimeter wall; and
- lighting means which comprise a light guide and which are configured and arranged to illuminate at least a portion of the casing.

In the air diffuser described in said patent document, the light guide also acts as a light diffuser, guiding and diffusing the light according to rays of light directed directly towards the inside of the duct making up the casing and also towards the front, in other words towards the outlet of the air flow which enters the passenger compartment of the vehicle, which can be unpleasant for the occupant of the passenger compartment.

Moreover, obtaining the light guide necessary to implement the solution described in said patent document is indeed complex, since, in addition to having to provide the mentioned light-diffusing effect, the geometry thereof has to be very specific, because, on the one hand, it must provide very specific relative inclinations for the different faces thereof, in order for the rays of light to leave the same with the desired angle, and, on the other hand, it must also fulfil a structural function, in particular that of acting as an intermediate coupling piece between two air ducts.

Likewise, due to the configuration of the light guide proposed in said document and the location it must have (coupled between two air ducts behind the dashboard of the vehicle), since the outlet of the light guide is necessarily very far from the outlet of air from the diffuser, a high emission intensity is required from the light source, with the aim of the lighting being perceptible by the occupant of the passenger compartment.

DE102015115365A1 discloses an air diffuser for motor vehicles, comprising the features of the preamble clause of claim 1.

DE212017000267U1 discloses an air diffuser for motor vehicles, comprising lighting means that are particularly arranged to emit light to the outside of an air vent housing through an irradiation hole thereof.

US2009/298406A1 discloses an air circulation system with a vent illuminated by means of one or more light sources coupled to the vent base and/or to the vent louvers.

FR2942326A1 discloses a ventilation and/or air conditioning system for motor vehicles, comprising an assembly that has a light guide inserted into an opening of a front frame of an air duct, to illuminate the same through a diffusion zone of the light guide.

It is therefore necessary to offer an alternative to the state of the art which covers the gaps found therein, by means of providing an air diffuser for motor vehicles, which includes lighting means that do not suffer from the disadvantages of known air diffusers, in particular that lacks, among others, the disadvantages indicated above.

### Description of the invention

To this end, the present invention concerns an air diffuser for motor vehicles, as described in independent claim 1.

Due to the reflective surface, it is possible to increase the diffusion of the beams of light generated by the lighting means, thus obtaining a high homogeneity of the beams of light redirected towards the passenger compartment of the vehicle.

For one exemplary embodiment, the first perimeter wall extends in the direction opposite to that of the outlet of the air flow and also towards the inside of said outlet opening.

Preferably, the air diffuser of the present invention comprises a ventilation duct assembled inside of at least a portion of the passageway defined by the casing, for the circulation of the air flow through the inside of the ventilation duct and therefore of the passageway of the casing wherein it is assembled.

Preferably, the portion of the casing to be illuminated is an outer portion, according to the outlet direction of the air flow, of the first perimeter wall. Said outer portion is visible from the passenger compartment of the vehicle once the air diffuser is assembled in the dashboard thereof.

According to one exemplary embodiment, said outer portion of the first perimeter wall is translucent or transparent.

For an implementation of said exemplary embodiment, the outer portion of the first perimeter wall is covered with a light-diffusing material.

For a variant of said implementation, the translucent or transparent portion of the first perimeter wall comprises a light inlet surface, configured to receive the light redirected by the reflective surface, which is at least one, transmitting it through the translucent or transparent portion and emitting it homogeneously through the light-diffusing material.

According to one embodiment, the light diffuser has optical coupling particles therein in order to enable the light that enters the same to be extracted, and is made of polymethyl methacrylate (PMMA) or polycarbonate (PC) comprising the aforementioned optical coupling particles distributed homogeneously inside. Thus, they enable the light to be extracted homogeneously through the outer surface.

Preferably, the air diffuser of the present invention comprises a perimeter opening defined by the separating gap existing between the first perimeter wall and a second perimeter wall, and which provides a passage for the light coming from the reflective surface, which is at least one, towards a region adjacent to the first perimeter wall and the outside of the casing, wherein the perimeter opening is an outlet opening for light from the inner cavity.

According to one exemplary embodiment, the second perimeter wall extends from one end of the reflective surface, which is at least one, to outside the inner cavity, beyond the perimeter opening.

According to a first embodiment, the perimeter opening enables a direct light outlet therethrough, and the second perimeter wall is equipped with a reflective surface configured and arranged to reflect a portion of the light which comes out of the perimeter opening towards the outer portion of the first perimeter wall in order to illuminate it indirectly.

According to a second embodiment, the perimeter opening is partially covered by the outer portion of the first perimeter wall, enabling a direct light outlet therethrough, and a light outlet through the translucent or transparent portion of the first perimeter wall by means of the light entering the translucent or transparent portion through the light inlet surface thereof and being homogeneously emitted through the light-diffusing material.

According to a third embodiment, the perimeter opening is completely covered by the outer portion of the first perimeter wall, enabling a light outlet only through the translucent or transparent portion of the first perimeter wall by means of the light entering the translucent or transparent portion through the light inlet surface (for example, one edge thereof) and being homogeneously emitted through the light-diffusing material.

Although for one exemplary embodiment the aforementioned reflective surface comprises only one reflective surface, according to a preferred embodiment the reflective surface comprises:
- a first reflective surface arranged facing the light guide, extending along the perimeter behind at least a portion of the length thereof, such that the light emitted by the light guide hits the first reflective surface and is reflected by it in a first reflection direction; and
- a second reflective surface arranged so that the light reflected according to the first reflection direction hits the second reflective surface and is in turn reflected by it according to a second reflection direction at least towards the previously indicated portion of the casing and/or adjacent region to be illuminated.

Thanks to the provision of the two reflective surfaces, the first one and the second one, it is possible to reduce the height of the inner cavity, and therefore the total volume of the air diffuser.

According to one implementation of said preferred exemplary embodiment, the second perimeter wall extends to outside the inner cavity, beyond the perimeter opening, from one end of the second reflective surface.

According to a variant of said implementation, the first and second reflective surfaces and the second perimeter wall are made up of different portions of one same perimeter part coupled to the perimeter frame and forming a portion of the casing.

For one exemplary embodiment, the ventilation duct is inserted inside the inner contour of the second perimeter wall and coupled thereto, either by engagement, by elastic deformation or by any other means.

According to one exemplary embodiment, the air diffuser of the present invention comprises a guide support which fastens the light guide to the first perimeter wall. For one implementation of said exemplary embodiment, the guide support is a perimeter support with an inner diameter or inner transverse dimension larger than the external diameter or external transverse dimension of a perimeter region of the first perimeter wall wherein it -perimetrically engages, to removably fasten the light guide supported by the guide support to the first perimeter wall .

The light guide comprises, for one exemplary embodiment, a first lateral face through which the light emission is produced, and a second lateral face, opposite the first one, which has an optical structure configured to direct the rays of light which hit it towards the first lateral face so that they make up said light emission.

Moreover, according to a variant of said exemplary embodiment, the guide support is made of an opaque material and has at least one reflective wall which is arranged adjacent to the second lateral face of the light guide, in order to reflect possible rays of light coming out through the second lateral face towards the first lateral wall.

### Brief description of the drawings

The foregoing and other advantages and features will be more fully understood from the following detailed description of exemplary embodiments with reference to the accompanying drawings, which should be considered by way of illustration and not limitation, wherein:
Figure 1 is an exploded perspective view of the air diffuser of the present invention, according to one exemplary embodiment, together with a portion of the dashboard of a vehicle wherein the air diffuser is assembled.
Figure 2 is a front elevation view of the air diffuser once it is assembled in the dashboard of the vehicle, according to the same embodiment of Figure 1.
Figure 3 is a partial side elevation view in a cross section according to the cutting plane I-I indicated in Figure 2, showing the air diffuser of the first aspect of the invention for an exemplary embodiment for which the opening of the cavity wherein the light guide is housed is partially covered.
Figure 4 is a view similar to that of Figure 3, but more schematic and for an exemplary embodiment for which the opening of the cavity wherein the light guide is housed is completely uncovered.
Figure 5 is a view similar to that of Figure 3, but for an exemplary embodiment for which the opening of the cavity wherein the light guide is housed is completely covered.
Figure 6 is a perspective view of the perimeter frame of the air diffuser of the present invention, for the same exemplary embodiment as Figure 1.

### Detailed description of some exemplary embodiments

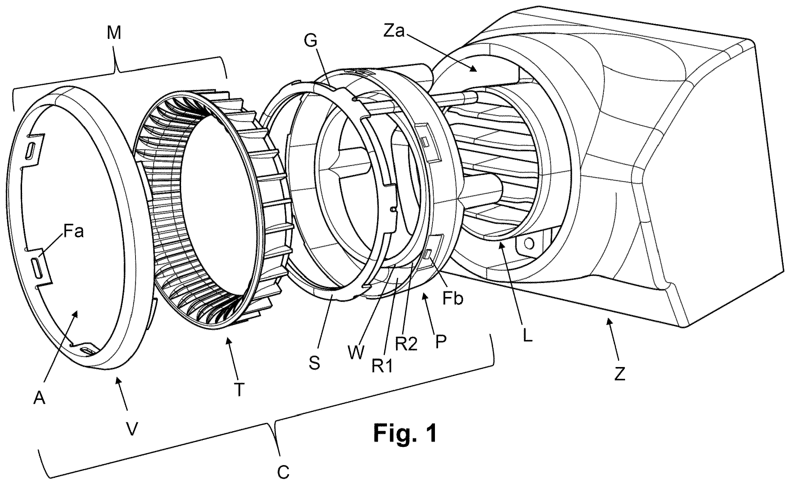

Figure 1 illustrates in detail the air diffuser for motor vehicles of the present invention, which, as seen, comprises a casing C which defines a passageway for the circulation of an air flow towards an outlet opening A of the casing C, wherein the casing C comprises a perimeter frame M which delimits the outlet opening A and which comprises a first perimeter wall T and a perimeter cover or trim V.

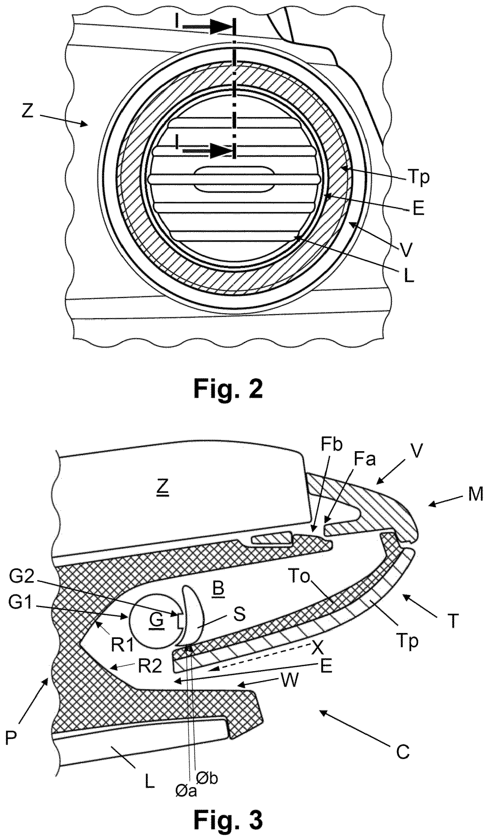

As seen, for example, in Figure 3, the first perimeter wall T extends in the direction opposite from the outlet of the air flow and also towards the inside of the outlet opening A, in other words in the direction and orientation indicated by the dashed arrow X. In this manner, the different types of illumination of the outer portion Tp which will be described later in this document are made possible.

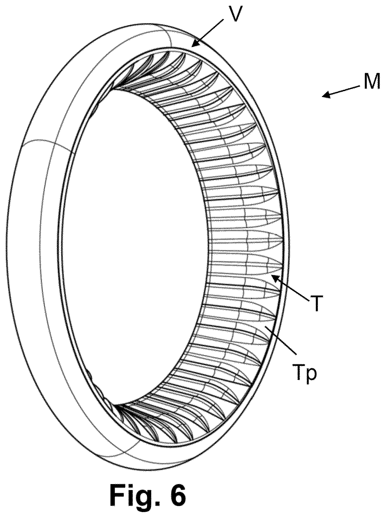

Figure 6 illustrates the perimeter frame M, in this case annular, with the two portions thereof coupled to each other, in other words, the first perimeter wall T and the perimeter cover or trim V, both with an annular shape.

For the exemplary embodiment illustrated by Figure 1, the casing C is formed by several components (which will be described later) with an annular shape and which are coupled to each other, and to a ventilation duct L, such that it is assembled inside of at least a portion of the passageway defined by the casing C, for the circulation of the air flow through the inside of the ventilation duct L and therefore the passageway of the casing C wherein it is assembled. The ventilation duct L is in turn assembled in an opening Za defined in the dashboard Z of the motor vehicle.

Figure 1 illustrates how the air diffuser of the present invention also comprises lighting means which comprise a light guide G and a guide support S which fastens the light guide G to the first perimeter wall T. In this case, both the light guide G, and the guide support S, as well as the first perimeter wall T have an annular shape, but other shapes are also possible for non-illustrated exemplary embodiments.

Figures 1 and 3 also show that the guide support S is an annular support with an inner diameter Øa larger than the outer diameter Øb of an annular region of the first perimeter wall T wherein it engages along the perimeter in order to fasten, in a removable manner, to the light guide G supported by the same.

As seen in Figures 1, 3, 4 and 5, the lighting means also comprise a reflector or reflective surface arranged spaced from the first perimeter wall T in a direction opposite to that of the air flow, and which in turn comprises:
- a first reflective surface R1 arranged facing the light guide G, extending along the perimeter, in this case behind the entire length thereof, such that the light emitted by the light guide G hits the first reflective surface R1 and is reflected by it in a first reflection direction D1; and
- a second reflective surface R2 arranged so that the light reflected according to the first reflection direction D1 hits the second reflective surface R2 and is in turn reflected by it according to a second reflection direction D2, redirecting it towards the portion of the casing C and/or adjacent region to be illuminated.

Figures 3 to 5 show how, between the first perimeter wall T and the first R1 and second R2 reflective surfaces, an inner cavity B is defined, in this case with an annular shape, wherein the light guide G is housed with the annular support S thereof.

For the exemplary embodiments illustrated by Figures 1 to 5, the portion of the casing C to be illuminated is an outer portion Tp, according to the outlet direction of the air flow, of the first perimeter wall T, in this case attached to an inner portion To.

For some implementations of some of said exemplary embodiments, the outer portion Tp is translucent or transparent and/or is covered with a light-diffusing material.

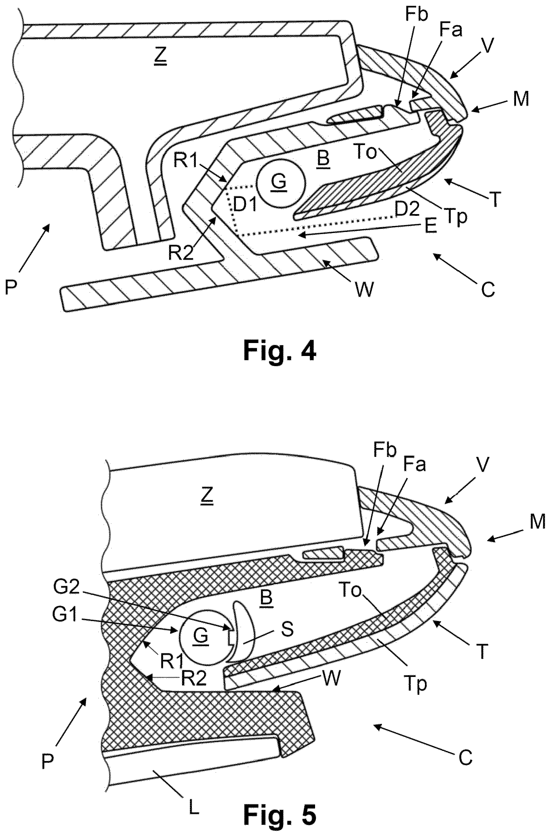

As seen in Figures 3 and 4, for the exemplary embodiments illustrated therein, the air diffuser comprises a perimeter opening E, or light outlet opening of the inner cavity B, defined by the separating gap existing between the first perimeter wall T and a second perimeter wall W, and which provides a passage for the light coming from the second reflective surface R2. The second perimeter wall W extends from one end of the second reflective surface R2 to outside the inner cavity B, beyond the perimeter opening E.

For the exemplary embodiment of Figure 4, the perimeter opening E enables a direct light outlet therethrough, and the second perimeter wall W is equipped with a reflective surface configured and arranged to reflect a portion of the light which comes out through the perimeter opening E towards the outer portion Tp of the first perimeter wall T in order to illuminate it indirectly. An observer located in the passenger compartment of the vehicle perceives an illuminated annular surface around the outlet opening A of the air diffuser, specifically, they perceive the outer portion Tp and the second perimeter wall W as indirectly illuminated. Thus, the beams of light generated are reflected by the at least one reflective surface and directed mainly towards the perimeter opening E. Said beams of light are reflected again, for the most part, on the second perimeter wall W, thus indirectly illuminating the outer portion Tp of the first perimeter wall T.

For the embodiments of Figures 3 and 5, the portion Tp is a translucent or transparent portion which is made or covered with a light-diffusing material, and comprises a light inlet surface, in this case arranged on one end thereof close to the second reflective surface R2, configured to receive the light redirected by the second reflective surface R2, transmitting it through the translucent or transparent portion Tp and emitting it homogeneously through the light-diffusing material.

In particular, for the exemplary embodiment of Figure 3, which also corresponds to that of Figure 2, the perimeter opening E is partially covered by the outer portion Tp, enabling a direct light outlet through the perimeter opening E, and also through the translucent or transparent portion Tp of the first perimeter wall T entering through the light inlet surface thereof (in other words, through the edge thereof) and emitting it homogeneously through the light-diffusing material, such that it can be seen from inside the passenger compartment of the vehicle, both a ring of light which comes out through E (see Figure 2) and the entire ring formed by the outer portion Tp illuminated homogeneously. In addition to the exemplary embodiment shown in Figure 4, wherein the outer portion Tp is illuminated indirectly, said outer portion Tp is a light-emitting body, thus generating a direct illumination of the first perimeter wall T. In this manner, the perception and intensity with which the first perimeter wall T is illuminated is increased.

In the exemplary embodiment of Figure 5, the perimeter opening E is completely covered by the outer portion Tp (or in other words, there is no such perimeter opening E), enabling a light outlet only through the translucent or transparent portion Tp entering through the light inlet surface thereof (in other words, through the edge thereof) and emitting it homogeneously through the light-diffusing material.

For the exemplary embodiment of Figure 1, the first R1 and second R2 reflective surfaces and the second perimeter wall W, which define the inner perimeter cavity B, may comprise a white surface finish, or another finish which favours the reflection of the beams of light. Additionally or in a complementary manner, said surface finish may comprise an engraving or roughness in order to achieve a diffuse reflection of the beams of light, thus improving the homogeneity thereof.

For the exemplary embodiment of Figure 1, the first R1 and second R2 reflective surfaces and the second perimeter wall W are made up of different portions of the same perimeter part P, in this case annular, which is coupled to the perimeter frame M and which makes up the casing C. The coupling is produced by means of introducing flanges Fb, which are defined in recessed portions distributed angularly around the outer contour of the annular part P, inside of respective grooves Fa, respectively defined in corresponding projections distributed angularly around the inner contour of the perimeter cover or trim V and which in turn engage into said recessed portions. Such a coupling is illustrated in Figures 3, 4 and 5, for a flange Fb and a groove Fa.

As illustrated in Figure 1 (prior to the assembly), and partly in Figures 3 and 5, the ventilation duct L is inserted inside the inner contour of the second perimeter wall Wand is coupled to it.

For the exemplary embodiments of Figures 3 and 5, the light guide G comprises a first lateral face G1 through which the light emission is produced, and a second lateral face G2, opposite the first one, which has an optical structure configured to direct the rays of light which hit it towards the first lateral face G1 so that they make up said light emission. Said light guide G receives the beams of light generated by means of at least one light emitter (not seen in the figures) through a light inlet surface. The received beams of light are transmitted through the inside of the light guide G until the extraction thereof through the first lateral face G1.

Advantageously, the guide support S is made of an opaque material and, for the exemplary embodiments of Figures 3 and 5, it has a reflective wall, preferably white or another colour or finish with a high reflection index, which is arranged adjacent to the second lateral face G2 of the light guide G, in order to reflect possible rays of light coming out through the second lateral face G2 towards the first lateral wall G1, thus preventing light from being lost and improving the efficiency of the lighting system of the air diffuser.

### List of references of the Figures:

C: casing
A: outlet opening
M: perimeter frame
T: first perimeter wall
Tp: outer portion of first perimeter wall
To: inner portion of first perimeter wall
V: perimeter cover or trim
W: second perimeter wall
G: light guide
G1: first lateral face of the light guide
G2: second lateral face of the light guide
S: guide support
B: inner cavity
L: ventilation duct
E: perimeter opening
R1: first reflective surface
R2: second reflective surface
P: perimeter part
Fa: groove
Fb: flange
Z: dashboard
Za: opening in dashboard

A person with average skill in the art could introduce changes and modifications in the exemplary embodiments described without departing from the scope of the invention as defined in the attached claims.

## Claims

1. An air diffuser for motor vehicles, comprising:
- a casing (C) which defines a passageway for the circulation of an air flow towards an outlet opening (A) of said casing (C), wherein the casing (C) comprises a perimeter frame (M) which delimits said outlet opening (A) and which comprises a first perimeter wall (T); and
- lighting means which comprise a light guide (G) and which are configured and arranged to illuminate at least a portion of said casing (C) and/or a region adjacent to it;
**characterised in that**:
- said lighting means comprise at least one reflective surface which is arranged spaced from said first perimeter wall (T) according to a direction opposite to that of the outlet of the air flow, and wherein the first perimeter wall (T) and the at least one reflective surface define an inner cavity (B);
- **in that** said light guide (G) extends along the perimeter behind said first perimeter wall (T), housed inside said inner cavity (B);
- and **in that** said at least one reflective surface is configured and arranged to reflect said light emitted by the light guide (G), redirecting it at least towards said portion of the casing (C) and/or adjacent region to be illuminated.

2. The air diffuser according to claim 1, wherein said first perimeter wall (T) extends in the direction opposite to that of the outlet of the air flow and also towards the inside of said outlet opening (A).

3. The air diffuser according to claim 1 or 2, comprising a ventilation duct (L) assembled inside of at least a portion of said passageway defined by the casing (C), for the circulation of said air flow through the inside of said ventilation duct (L) and therefore of the passageway of the casing (C) wherein it is assembled.

4. The air diffuser according to claim 1, 2 or 3, wherein said portion of the casing (C) to be illuminated is an outer portion (Tp), according to the outlet direction of the air flow, of the first perimeter wall (T).

5. The air diffuser according to claim 4, wherein said outer portion (Tp) of the first perimeter wall (T) is translucent or transparent.

6. The air diffuser according to claim 5, wherein said outer portion (Tp) of the first perimeter wall (T) is covered with a light-diffusing material.

7. The air diffuser according to claim 6, wherein said translucent or transparent portion (Tp) of the first perimeter wall (T) comprises a light inlet surface, configured to receive the light redirected by the at least one reflective surface, transmitting it through said translucent or transparent portion (Tp) and emitting it homogeneously through the light-diffusing material.

8. The air diffuser according to any one of the preceding claims, comprising a perimeter opening (E) defined by the separating gap existing between the first perimeter wall (T) and a second perimeter wall (W), and providing a passage for the light coming from the at least one reflective surface towards a region adjacent to the first perimeter wall (T) and the outside of the casing (C), wherein said perimeter opening (E) is a light outlet opening of said inner cavity (B).

9. The air diffuser according to claim 8, wherein said second perimeter wall (W) extends from one end of the at least one reflective surface to outside the inner cavity (B), beyond the perimeter opening (E).

10. The air diffuser according to claim 8 or 9 when it depends on any one of claims 4, 5 or 6, wherein the perimeter opening (E) enables a direct light outlet therethrough, and in that the second perimeter wall (W) is equipped with a reflective surface configured and arranged to reflect a portion of the light which comes out through said perimeter opening (E) towards said outer portion (Tp) of the first perimeter wall (T) in order to illuminate it indirectly.

11. The air diffuser according to claim 8 or 9 when it depends on claim 7, wherein the perimeter opening (E) is partially covered by the outer portion (Tp) of the first perimeter wall (T), enabling a direct light outlet therethrough, and a light outlet through the translucent or transparent portion (Tp) of the first perimeter wall (T) by means of the light entering the translucent or transparent portion (Tp) through the light inlet surface thereof and being homogeneously emitted through the light-diffusing material.

12. The air diffuser according to claim 8 or 9 when it depends on claim 7, wherein the perimeter opening (E) is completely covered by the outer portion (Tp) of the first perimeter wall (T), enabling a light outlet only through the translucent or transparent portion (Tp) of the first perimeter wall (T) by means of the light entering the translucent or transparent portion (Tp) through the light inlet surface thereof and being homogeneously emitted through the light-diffusing material.

13. The air diffuser according to any one of the preceding claims, wherein said reflective surface comprises:
- a first reflective surface (R1) arranged facing the light guide (G), extending along the perimeter behind at least a portion of the length thereof, such that said light emitted by the light guide (G) hits said first reflective surface (R1) and is reflected by it in a first reflection direction; and
- a second reflective surface (R2) arranged so that said light reflected according to said first reflection direction hits said second reflective surface (R2) and is in turn reflected by it according to a second reflection direction at least towards said portion of the casing (C) and/or adjacent region to be illuminated.

14. The air diffuser according to claim 13 when it depends on claim 9, wherein said second perimeter wall (W) extends to outside the inner cavity (B), beyond the perimeter opening (E), from one end of said second reflective surface (R2).

15. The air diffuser according to any one of the preceding claims, comprising a guide support (S) which fastens the light guide (G) to the first perimeter wall (T), wherein said guide support (S) is a perimeter support with an inner diameter or inner transverse dimension (Øa) larger than the external diameter or external transverse dimension (Øb) of a perimeter region of the first perimeter wall (T) wherein it perimetrically engages, to removably fasten the light guide (G) supported by the guide support (S) to the first perimeter wall (T).

## Patentansprüche

1. Luftverteiler für Kraftfahrzeuge, umfassend:
- ein Gehäuse (C), das einen Durchgang für die Zirkulation eines Luftstroms hin zu einer Auslassöffnung (A) des Gehäuses (C) definiert, wobei das Gehäuse (C) einen Umfangsrahmen (M) umfasst, der die Auslassöffnung (A) begrenzt, und der eine erste Umfangswand (T) umfasst; und
- Beleuchtungsmittel, die eine Beleuchtungsführung (G) umfassen, und die konfiguriert und angeordnet sind, um mindestens einen Abschnitt des Gehäuses (C) und/oder eine Region nahe diesem zu beleuchten;
**dadurch gekennzeichnet, dass**:
- die Beleuchtungsmittel mindestens eine reflektierende Fläche umfassen, die beabstandet von der ersten Umfangswand (T) gemäß einer Richtung gegenüber derjenigen des Auslasses des Luftstroms angeordnet ist, und wobei die erste Umfangswand (T) und die mindestens eine reflektierende Fläche einen inneren Hohlraum (B) definieren;
- dadurch, dass sich die Lichtführung (G) entlang dem Umfang hinter der ersten Umfangswand (T) erstreckt, die innerhalb des inneren Hohlraums (B) untergebracht ist;
- und dadurch, dass mindestens eine reflektierende Fläche konfiguriert und angeordnet ist, um das Licht, emittiert von der Lichtführung (G), zu reflektieren, und es mindestens hin zu dem Abschnitt des Gehäuses (C) und/oder einer benachbarten Region, die beleuchtet werden soll, umzuleiten.

2. Luftverteiler nach Anspruch 1, wobei sich die erste Umfangswand (T) in die Richtung gegenüber derjenigen des Auslasses des Luftstroms und auch hin zu der Innenseite der Auslassöffnung (A) erstreckt.

3. Luftverteiler nach Anspruch 1 oder 2, umfassend eine Ventilationsleitung (L), die innerhalb mindestens eines Abschnitts des Durchgangs, definiert vom Gehäuse (C), für die Zirkulation des Luftstroms durch die Innenseite der Ventilationsleitung (L) und daher des Durchgangs des Gehäuses (C), worin sie zusammengebaut ist, montiert ist.

4. Luftverteiler nach Anspruch 1, 2 oder 3, wobei der Abschnitt des Gehäuses (C), der beleuchtet werden soll, ein äußerer Abschnitt (Tp) gemäß der Auslassrichtung des Luftstroms der ersten Umgebungswand (T) ist.

5. Luftverteiler nach Anspruch 4, wobei der äußere Abschnitt (Tp) der ersten Umfangswand (T) lichtdurchlässig oder transparent ist.

6. Luftverteiler nach Anspruch 5, wobei der äußere Abschnitt (Tp) der ersten Umfangswand (T) mit einem lichtstreuenden Material bedeckt ist.

7. Luftverteiler nach Anspruch 6, wobei der lichtdurchlässige oder transparente Abschnitt (Tp) der ersten Umfangswand (T) eine Lichteinlassfläche umfasst, die konfiguriert ist, um das Licht zu erhalten, das durch die mindestens eine reflektierende Fläche umgeleitet ist, und es durch den lichtdurchlässigen oder transparenten Abschnitt (Tp) zu übertragen und es gleichmäßig durch das lichtstreuende Material zu emittieren.

8. Luftverteiler nach einem der vorhergehenden Ansprüche, umfassend eine Umfangsöffnung (E), die durch den trennenden Raum definiert ist, der zwischen der ersten Umfangswand (T) und der zweiten Umfangswand (W) vorhanden ist und einen Durchgang für das Licht, das von der mindestens einen reflektierenden Fläche stammt, hin zu einer Region benachbart der ersten Umfangswand (T) und der Außenseite des Gehäuses (C) bereitstellt, wobei die Umfangsöffnung (E) eine Lichtauslassöffnung des inneren Hohlraums (B) ist.

9. Luftverteiler nach Anspruch 8, wobei sich die zweite Umfangswand (W) von einem Ende der mindestens einen reflektierenden Fläche zur Außenseite des inneren Hohlraums (B), über die Umfangsöffnung (E) hinaus, erstreckt.

10. Luftverteiler nach Anspruch 8 oder 9, wenn er von einem der Ansprüche 4, 5, oder 6 abhängt, wobei die Umfangsöffnung (E) einen direkten Lichtauslass dadurch ermöglicht, und dadurch, dass die zweite Umfangswand (W) mit einer reflektierenden Fläche ausgestattet ist, die konfiguriert und angeordnet ist, um einen Abschnitt des Lichts zu reflektieren, der durch die Umfangsöffnung (E) hin zu dem äußeren Abschnitt (Tp) der ersten Umfangswand (T) austritt, um sie indirekt zu beleuchten.

11. Luftverteiler nach Anspruch 8 oder 9, wenn er von Anspruch 7 abhängt, wobei die Umfangsöffnung (E) teilweise vom Äußeren Abschnitt (Tp) der ersten Umfangswand (T) bedeckt ist, wodurch ein direkter Lichtauslass dadurch und ein Lichtauslass durch den lichtdurchlässigen oder transparenten Abschnitt (Tp) der ersten Umfangswand (T) mit Hilfe des Lichts, das in den lichtdurchlässigen oder transparenten Abschnitt (Tp) durch die Lichteinlassfläche davon ermöglicht und gleichmäßig durch das lichtstreuende Material emittiert wird.

12. Luftverteiler nach Anspruch 8 oder 9, wenn er von Anspruch 7 abhängt, wobei die Umfangsöffnung (E) vollständig vom äußeren Abschnitt (Tp) der ersten Umfangswand (T) bedeckt ist, wodurch ein Lichtauslass nur durch den lichtdurchlässigen oder transparenten Abschnitt (Tp) der ersten Umfangswand (T) mit Hilfe des Lichts, das in den lichtdurchlässigen oder transparenten Abschnitt (Tp) durch die Lichteinlassfläche eintritt, ermöglicht und gleichmäßig durch das lichtstreuende Material emittiert wird.

13. Luftverteiler nach einem der vorhergehenden Ansprüche, wobei die reflektierende Fläche Folgendes umfasst:
- eine erste reflektierende Fläche (R1), angeordnet gegenüber der Lichtführung (G), die sich entlang dem Umfang hinter mindestens einem Abschnitt der Länge davon erstreckt, so dass das Licht, emittiert von der Lichtführung (G), auf die erste reflektierende Fläche (R1) trifft und von ihr in eine erste Reflektionsrichtung reflektiert wird; und
- eine zweite reflektierende Fläche (R2), die so angeordnet ist, dass das Licht, reflektiert gemäß der ersten Reflektionsrichtung, auf die zweite reflektierende Fläche (R2) trifft und seinerseits dadurch gemäß einer zweiten Reflektionsrichtung mindestens hin zu dem Abschnitt des Gehäuses (C) und/oder eine benachbarte Region, die beleuchtet werden soll, reflektiert.

14. Luftverteiler nach Anspruch 13, wenn er von Anspruch 9 abhängt, wobei sich die zweite Umfangswand (W) auf die Außenseite des inneren Hohlraums (B), über die Umfangsöffnung (E) hinaus, von einem Ende der zweiten reflektierenden Oberfläche (R2) erstreckt.

15. Luftverteiler nach einem der vorhergehenden Ansprüche, umfassend einen Führungsträger (S), der die Lichtführung (G) an die erste Umfangswand (T) befestigt, wobei der Führungsträger (S) ein Umfangsträger mit einem inneren Durchmesser oder einer inneren Querabmessung (Øa) ist, die größer als der äußere Durchmesser oder die äußere Querabmessung (Øb) einer der Umfangsregion der ersten Umfangswand (T) ist, wobei er umfänglich eingreift, um entfernbar die Lichtführung (G) zu befestigen, die vom Führungsträger (S) an die erste Umfangswand (T) getragen wird.

## Revendications

1. Diffuseur d'air pour véhicules à moteur comprenant :
un carter (C) qui définit une voie de passage pour la circulation d'un flux d'air vers une ouverture de sortie (A) dudit carter (C), dans lequel le carter (C) comprend un bâti périmétral (M) qui délimite ladite ouverture de sortie (A) et qui comprend une première paroi périmétrale (T) ; et
des moyens d'éclairage qui comprennent un guide de lumière (G) et qui sont configurés et agencés pour éclairer au moins une partie dudit carter (C) et/ou une région adjacente à ce dernier ;
**caractérisé en ce que** :
lesdits moyens d'éclairage comprennent au moins une surface réfléchissante qui est agencée à distance de ladite première paroi périmétrale (T) selon une direction opposée à celle de la sortie du flux d'air, et dans lequel la première paroi périmétrale (T) et la au moins une surface réfléchissante définissent une cavité interne (B) ;
**en ce que** ledit guide de lumière (G) s'étend le long du périmètre derrière ladite première paroi périmétrale (T), logé à l'intérieur de ladite cavité interne (B) ;
et **en ce que** ladite au moins une surface réfléchissante est configurée et agencée pour refléter ladite lumière émise par le guide de lumière (G), la redirigeant au moins vers ladite partie du carter (C) et/ou la région adjacente à éclairer.

2. Diffuseur d'air selon la revendication 1, dans lequel ladite première paroi périmétrale (T) s'étend dans la direction opposée à celle de la sortie du flux d'air et également vers l'intérieur de ladite ouverture de sortie (A).

3. Diffuseur d'air selon la revendication 1 ou 2, comprenant un conduit de ventilation (L) assemblé à l'intérieur d'au moins une partie de ladite voie de passage définie par le carter (C), pour la circulation dudit flux d'air à l'intérieur dudit conduit de ventilation (L) et par conséquent de la voie de passage du carter (C), dans laquelle il est assemblé.

4. Diffuseur d'air selon la revendication 1, 2 ou 3, dans lequel ladite partie du carter (C) à éclairer est une partie externe (Tp), selon la direction de sortie du flux d'air, de la première paroi périmétrale (T).

5. Diffuseur d'air selon la revendication 4, dans lequel ladite partie externe (Tp) de la première paroi périmétrale (T) est translucide ou transparente.

6. Diffuseur d'air selon la revendication 5, dans lequel ladite partie externe (Tp) de la première paroi périmétrale (T) est recouverte avec un matériau de diffusion de lumière.

7. Diffuseur d'air selon la revendication 6, dans lequel ladite partie translucide ou transparente (Tp) de la première paroi périmétrale (T) comprend une surface d'entrée de lumière configurée pour recevoir la lumière redirigée par la au moins une surface réfléchissante, la transmettant à travers ladite partie translucide ou transparente (Tp) et l'émettant de manière homogène à travers le matériau de diffusion de lumière.

8. Diffuseur d'air selon l'une quelconque des revendications précédentes, comprenant une ouverture périmétrale (E) définie par l'espace de séparation existant entre la première paroi périmétrale (T) et une seconde paroi périmétrale (W), et fournissant un passage pour la lumière provenant de la au moins une surface réfléchissante vers une région adjacente à la première paroi périmétrale (T) et l'extérieur du carter (C), dans lequel ladite ouverture périmétrale (E) est une ouverture de sortie de lumière de ladite cavité interne (B).

9. Diffuseur d'air selon la revendication 8, dans lequel ladite seconde paroi périmétrale (W) s'étend à partir d'une extrémité de la au moins une surface réfléchissante vers l'extérieur de la cavité interne (B), au-delà de l'ouverture périmétrale (E).

10. Diffuseur d'air selon la revendication 8 ou 9, lorsqu'elle dépend de l'une quelconque des revendications 4, 5 ou 6, dans lequel l'ouverture périmétrale (E) permet une sortie de lumière directe à travers cette dernière, et en ce que la seconde paroi périmétrale (W) est équipée d'une surface réfléchissante configurée et agencée pour refléter une partie de la lumière qui sort par ladite ouverture périmétrale (E) vers ladite partie externe (Tp) de la première paroi périmétrale (T) afin de l'éclairer indirectement.

11. Diffuseur d'air selon la revendication 8 ou 9, lorsqu'elle dépend de la revendication 7, dans lequel l'ouverture périmétrale (E) est partiellement recouverte par la partie externe (Tp) de la première paroi périmétrale (T), permettant une sortie de lumière directe à travers cette dernière, et une sortie de lumière à travers la partie translucide ou transparente (Tp) de la première paroi périmétrale (T) au moyen de la lumière entrant dans la partie translucide ou transparente (Tp) à travers sa surface d'entrée de lumière et étant émise, de manière homogène à travers le matériau de diffusion de lumière.

12. Diffuseur d'air selon la revendication 8 ou 9, lorsqu'elle dépend de la revendication 7, dans lequel l'ouverture périmétrale (E) est complètement recouverte par la partie externe (Tp) de la première paroi périmétrale (T), permettant une sortie de lumière uniquement à travers la partie translucide ou transparente (Tp) de la première paroi périmétrale (T) au moyen de la lumière entrant dans la partie translucide ou transparente (Tp) à travers sa surface d'entrée de lumière et étant émise, de manière homogène, à travers le matériau de diffusion de lumière.

13. Diffuseur d'air selon l'une quelconque des revendications précédentes, dans lequel ladite surface réfléchissante comprend :
une première surface réfléchissante (R1) agencée en face du guide de lumière (G), s'étendant le long du périmètre derrière au moins une partie de sa longueur, de sorte que ladite lumière émise par le guide de lumière (G) heurte ladite première surface réfléchissante (R1) et est reflétée par ce dernier dans une première direction de réflexion ; et
une seconde surface réfléchissante (R2) agencée de sorte que ladite lumière reflétée selon ladite première direction de réflexion heurte ladite seconde surface réfléchissante (R2) et est à son tour reflétée par cette dernière selon une seconde direction de réflexion au moins vers ladite partie du carter (C) et/ou la région adjacente à éclairer.

14. Diffuseur d'air selon la revendication 13, lorsqu'elle dépend de la revendication 9, dans lequel ladite seconde paroi périmétrale (W) s'étend vers l'extérieur de la cavité interne (B), au-delà de l'ouverture périmétrale (E), à partir d'une extrémité de ladite seconde surface réfléchissante (R2).

15. Diffuseur d'air selon l'une quelconque des revendications précédentes, comprenant un support de guidage (S) qui fixe le guide de lumière (G) sur la première paroi périmétrale (T), dans lequel ledit support de guidage (S) est un support périmétral avec un diamètre interne ou une dimension transversale interne (∅a) supérieur(e) au diamètre externe ou à la dimension transversale interne (Øb) d'une région périmétrale de la première paroi périmétrale (T), dans lequel il se met en prise, de manière périmétrale, pour fixer, de manière amovible, le guide de lumière (G) supporté par le support de guidage (S) sur la première paroi périmétrale (T).
